# EUROPÄISCHE PATENTSCHRIFT

(11) **EP 1 425 088 B1**
(45) Veröffentlichungstag und Bekanntmachung des Hinweises auf die Patenterteilung: **23.04.2008**
(21) Anmeldenummer: 02797570.5
(22) Anmeldetag: 07.08.2002
(51) Int. Cl.: B01J 2/26, B01J 2/20

(54) **VORRICHTUNG ZUR HERSTELLUNG VON GRANULAT**
DEVICE FOR PRODUCING GRANULES
DISPOSITIF DE PRODUCTION DE GRANULES

(30) Priorität: 03.09.2001 DE 10144257
(43) Veröffentlichungstag der Anmeldung: 09.06.2004
(73) Patentinhaber: Santrade Ltd., CH-6002 Luzern (CH)
(72) Erfinder: KLEINHANS, Matthias, 71336 Waiblingen (DE); HÄFELE, Dietmar, 73650 Winterbach (DE); GIERKE, Stephan, 70736 Fellbach (DE)
(74) Vertreter: Patentanwälte Ruff, Wilhelm, Beier, Dauster & Partner
(86) Internationale Anmeldenummer: PCT/EP2002/008803
(87) Internationale Veröffentlichungsnummer: WO 2003/020408

(56) Entgegenhaltungen:
- EP-A- 0 134 944
- DE-C- 4 332 953

## Beschreibung

Die Erfindung betrifft eine Vorrichtung zur Herstellung von Granulat aus fließfähigen, viskosen Substanzen, mit einem mit den Substanzen beschickten Behälter mit mindestens einer Ausflussöffnung, die durch ein daran vorbeigeführtes gelochtes Band periodisch geöffnet und wieder geschlossen wird, so dass die Substanzen aus den Löchern in Tropfenform auf ein darunter geführtes, insbesondere als Kühlband ausgebildetes Band fallen und sich dort verfestigen.

Eine Vorrichtung dieser Art ist aus der EP 0 134 944 B1 bekannt. Man hat dort ein endlos umlaufendes Band aus Kunststoff als gelochtes Band vorgesehen, um eine genügende Elastizität beim Umlauf um Trommeln mit kleinem Durchmesser und zum Anlegen an die Ausflussöffnung des Behälters zu erhalten. Die Verwendung von Kunststoffbändern führt aber zu einem verhältnismäßig hohen Verschleiß der Bänder.

Man hat daher auch schon vorgeschlagen (DE 43 32 953 C1), anstelle eines Kunststoffbandes ein sehr dünnes, perforiertes Stahlband zu verwenden, das geeignet ist, anstelle eines Kunststoffbandes für eine Vorrichtung der eingangs genannten Art verwendet zu werden. Da ein solches Metallband aber nicht genügend Dicke besitzt, um beim Tropfvorgang das notwendige Portionsvolumen zur Aufnahme der zu vertropfenden Substanzen zu bieten, sind dem dünnen Stahlband an allen Perforationsöffnungen nach der vom Behälter abgewandten Seite abstehende Hülsen zugeordnet worden, die eine Umlenkung des Bandes nicht nachteilig beeinflussen, aber zur Aufnahme des Portionsvolumens dienen können. Bänder dieser Art sind verhältnismäßig aufwendig herzustellen. Sie leiden, ebenso wie die üblicherweise verwendeten Kunststoffbänder auch an dem Mangel, dass zur Sicherstellung der notwendigen Temperierung der zu vertropfenden Substanzen relativ aufwendige Heizeinrichtungen im Bereich der Tropfenbildunässtelle vorgesehen sein müssen, um jedenfalls an dieser Stelle eine vorzeitige Verfestigung des aus den Löchern austretenden Materiales zu verhindern.

Der vorliegenden Erfindung liegt die Aufgabe zugrunde, bei einer Vorrichtung der eingangs genannten Art in möglichst einfacher Weise für eine Temperierung an den im Band vorgesehenen Austropföffnungen zu sorgen.

Zur Lösung dieser Aufgabe wird bei einer Vorrichtung der eingangs genannten Art, ausgehend von der Überlegung, dass die beispielsweise bei Bandpressen vorgesehenen Stahlbänder sowohl die notwendige Dicke für einen Tropfvorgang als auch eine ausgezeichnete Wärmespeicherfähigkeit haben, vorgesehen, dass als gelochtes Band ein Stahlband mit einer für die Tropfenbildung ausreichenden Dicke verwendet wird, dass dieses Stahlband um Umlenktrommeln mit ausreichend großen Durchmessern, um eine Rissbildung an den Löchern zu vermeiden, geführt ist und dass dem Stahlband mindestens im Abstand vor der Stelle der Tropfenbildung eine Beheizungseinrichtung zugeordnet ist. Diese Maßnahme bedingt zwar, dass beispielsweise bei der Verwendung von Stahlbändern mit einer Dicke zwischen 1 mm bis 4 mm Umlenktrommeln in der Größenordnung von etwa 1000 mm verwendet werden müssen, wie sie auch bei Bandpressen vorgesehen sind, dass aber die Wärmekapazität eines solchen Stahlbandes in ganz besonders vorteilhafter Weise geeignet ist, sie für Vorrichtungen der eingangs genannten Art vorzusehen. Es hat sich gezeigt, dass der Tropfvorgang überraschenderweise mit verschiedenen viskosen Substanzen bei bestimmten Temperaturen durchgeführt werden konnte, wobei die Temperierung des Stahlbandes jeweils auf den Anwendungsfall abgestimmt werden konnte. Die verwendeten glatten Stahlbänder stellen einfache Konstruktionselemente dar, die sehr verschleißfest und stabil sind und sich auch leicht reinigen lassen.

In Weiterbildung der Erfindung ist es in relativ einfacher Weise möglich, die Beheizungseinrichtung im Innenraum zumindest der Umlenktrommel anzuordnen, die in der Bewegungsrichtung des Stahlbanduntertrums vor der der Tropfenbildung liegt. Der Innenraum dieser großen Umlenktrommel bietet ohne Probleme Platz für alle denkbaren Arten von Beheizungseinrichtungen, mit denen die Umlenktrommel selbst und überdies das gelochte Stahlband temperiert werden kann.

In weiterer Ausgestaltung der Erfindung kann die Ausflussöffnung des mit den zu vertropfenden Substanzen beschickten Behälters als eine quer zur Bewegungsrichtung des Stahlbandes verlaufende und über die Bandbreite durchgehende nutartige Ausnehmung ausgebildet sein, die in der am Stahlband anliegenden Fläche des Behälters mündet. Diese nutartige Ausnehmung kann in Bandlaufrichtung breit genug ausgelegt werden, um die jeweils gewünschte Tropfengröße zu erreichen, die dann nach der Erstarrung der entsprechenden Tropfen auf dem darunter liegenden Kühlband das gewünschte Granulat bilden.

Die Ausflussöffnung kann aber auch die Form von mehreren, parallel zueinander und quer zur Bewegungsrichtung des Stahlbandes verlaufenden nutartigen Ausnehmungen einnehmen, die alle in der am Stahlband anliegenden Fläche des Behälters münden. Es hat sich gezeigt, dass für die Vertropfung mancher Substanzen eine solche Ausführungsform günstiger ist. In beiden Fällen, also auch bei der Verwendung einer in Bandlaufrichtung relativ breiten nutartigen Ausnehmung bietet das erfindungsgemäß vorgesehene, verhältnismäßig dicke Stahlband den Vorteil, dass es sich, obwohl es fest an die nach außen gewandte Fläche des Behälters angedrückt ist, nicht in die nutartige Ausnehmung hereindrückt.

In Weiterbildung der Erfindung kann die am Stahlband anliegende Fläche des Behälters leicht konvex gewölbt sein, und es wird möglich, das Stahlband unter Vorspannung an der konvexen Fläche des Behälters anliegen zu lassen.

Die Erfindung ist anhand von Ausführungsbeispielen in der Zeichnung dargestellt und wird im folgenden beschrieben. Es zeigen:
- Fig. 1: eine schematische Seitenansicht einer Vorrichtung nach der Erfindung,
- Fig. 2: eine vergrößerte Darstellung eines Längsschnittes durch den in Fig. 1 dem Untertrum des laufenden endlosen Stahlbandes zugeordneten Behälters und
- Fig. 3: eine Schnittdarstellung, ähnlich Fig. 2, jedoch bei einer anderen Ausführungsform des Behälters.

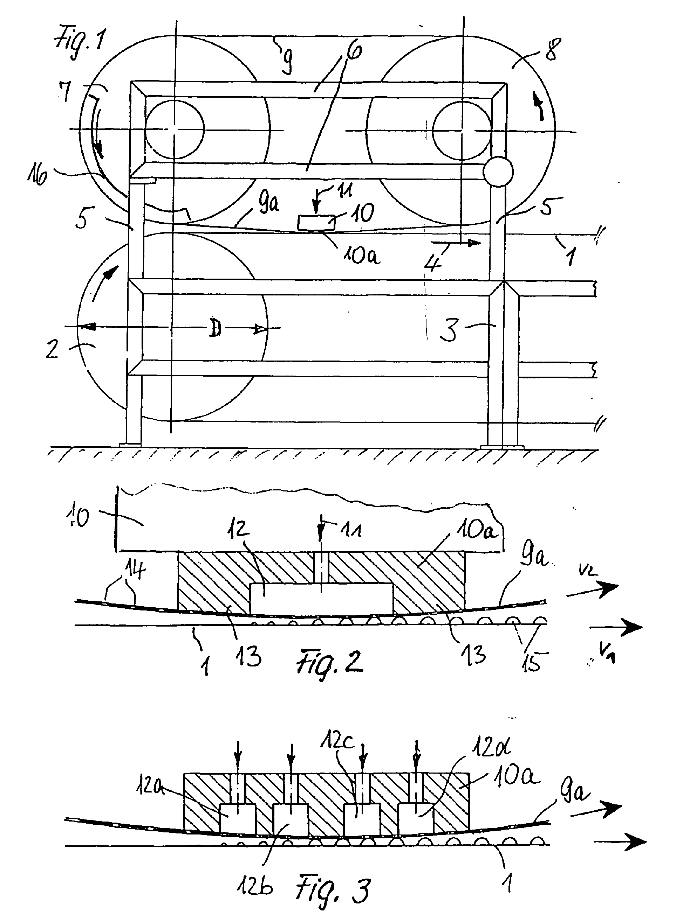

Die Fig. 1 lässt erkennen, dass ein endlos umlaufendes Stahlband 1, das in nicht näher gezeigter Weise als ein Kühlband ausgebildet ist, mit Hilfe von zwei Umlenkwalzen, von denen nur die Umlenkwalze 2 gezeigt ist, in einem Maschinengestell 3 gehalten ist. Das Kühl-Stahlband läuft im Sinne des Pfeiles 4 um, Die gezeigte Umlenkwalze 2 besitzt einen Durchmesser D von etwa 1000 mm.

Im Maschinengestell 3, das über senkrechte Träger 5 nach oben verlängert mit einem Tragrahmen 6 versehen ist, sind zwei weitere Umlenkrollen 7 und 8 mit etwa dem gleichen Durchmesser wie die Umlenkwalze 2 vorgesehen. Sie dienen zur Führung und zum Antrieb eines weiteren endlosen Stahlbands 9, welches nahezu über seine gesamte Breite gelocht ist - was lediglich in den Fig. 2 und 3 angedeutet ist.

Das gelochte Stahlband 9 wird mit seinem unteren Trum 9a an einem Behälter 10 vorbeigeführt, der in nicht näher dargestellter, weil bekannter Weise, mit einer fließfähigen viskosen Substanz im Sinn des Pfeiles 11 beschickt wird, die dann in in der anhand der Fig. 2 und 3 noch zu erläuternden Weise in Tropfenform auf das Kühlband 1 abgegeben wird.

Der Behälter 10, der in einer ersten Ausführungsform anhand von Fig. 2 erkennbar ist, ist ebenfalls entweder mit dem Rahmen 6 oder mit den Tragstützen 5 so verbunden, dass er in einer bestimmten Lage gehalten werden kann, in der er quer zur Innenfläche des unteren Trums 9a verläuft. In dieser Lage legt sich seine Ausströmöffnung 12 an das Untertrum 9a an, welches unter Vorspannung gehalten ist und so fest und dicht an dieser Ausströmöffnung anliegt.

Dem großen Hohlraum zumindest der Trommel 7 ist eine Beheizung, beispielsweise in der Form einer Strahlerbeheizung (16) oder in der Form einer Ölheizung zugeordnet, die in einem Doppelmantel der Umlenktrommel 7 verläuft. Auch andere steuerbare Heizeinrichtungen sind denkbar. Entscheidend ist, dass die Heizeinrichtung so steuer- und regelbar sein muss, dass das um die Umlenktrommel 7 geführte Stahlband 9 eine bestimmte Temperatur aufweist, wenn es das Mundstück 10a des Behälters 10 erreicht. Der Behälter 10 und sein Mundstück 10a selbst werden ebenfalls durch geeignete Beheizung so temperiert, dass eine bestimmte Viskosität der zu vertropfenden Substanz aufrecht erhalten bleibt. An diese Temperatur ist die Temperatur des Stahlbandes 9 anzugleichen, um zu verhindern, dass sich die Viskosität und damit die Tropffähigkeit der zu verarbeitenden Substanz innerhalb der Bohrungen 14 in nicht erwünschter Weise ändert. Diese Art der Temperierung lässt sich mit dem neuen gelochten Stahlband 9 sehr gut erreichen, weil die Wärmespeichereigenschaften des Stahlbandes ausnützbar sind. In dem großen Hohlraum der Trommel 7, natürlich aber auch der Trommel 8, lassen sich ohne Probleme entsprechend steuerbare Heizeinrichtungen unterbringen.

Die Fig. 2 zeigt, dass die Ausströmöffnung 2 als eine nutartige Ausnehmung ausgebildet ist, die in einem Mundstück 10a des Behälters 10 angeordnet ist, welches Teil des Behälters 10 ist. Das Mundstück 10a ist im wesentlichen in der Art einer quer über das Untertrum 9a verlaufenden Leiste ausgebildet, deren beidseitig von der Ausnehmung 12 vorgesehene Schenkel 13 eine leicht konvexe Außenfläche aufweisen, die gegen das Untertrum 9a gepresst ist. Dieses Anliegen des Stahlbands 9 am Mundstück 10a kann in einfacher Weise dadurch erreicht werden, dass der Abstand der beiden Umlenkwalzen 7 und 8 in gewissem Umfang veränderbar ist, so dass dadurch das Untertrum 9a mit der gewünschten Vorspannung am Mundstück 10a zur Anlage gebracht werden kann.

Wie Fig. 2 erkennbar macht, kommen die im Stahlband 9 angeordneten Öffnungen 14 nacheinander in den Bereich der Ausnehmung 12, wo, bedingt durch den Druck der in dieser Ausnehmung vorhandenen Substanz Material in die Öffnung 14 eindringt und beim Durchwandern der Breite der Ausnehmung 12 in Richtung der Komponente V₂ mehr und mehr aus der Öffnung heraus nach unten gedrückt wird und dann in der Form von Tropfen 15 auf dem Band 1 verbleibt, wo diese Tropfen zur Erstarrung kommen. Die Breite der Ausnehmung 12 und die Umlaufgeschwindigkeit des Bandes 9 tragen daher mit zur Tropfenbildung bei, wobei natürlich die Dicke des Stahlbandes 9 und die Größe der Öffnungen 14 in Abstimmung mit der Viskosität der zu vertropfenden Substanz eine Rolle spielt.

Festgehalten werden muss noch, dass die Umlaufgeschwindigkeit V₂ des Stahlbandes 9 mit der Umlaufgeschwindigkeit V₁ des Kühlbandes 1 übereinstimmen sollte, wenn die Tropfenbildung in der oben angegebenen Weise erfolgen soll.

Die Fig. 3 zeigt eine Variante des Mundstückes 10a insofern, als hier nicht eine durchgehende Ausnehmung 12, sondern mehrere Ausnehmungen 12a bis 12d im Mundstück 10a vorgesehen sind, die sich jeweils über die gesamte Bandbreite, jedenfalls über den Bereich, der gelocht ist, erstrecken. Es ist ohne weiteres erkennbar, dass auch in diesem Fall die gewünschte Tropfenbildung erfolgt, wobei auch für diesen Fall die Umlaufgeschwindigkeiten des Stahlbandes 9 und des Stahlbandes 1 gleich groß sein sollten.

## Patentansprüche

1. Vorrichtung zur Herstellung von Granulat aus fließfähigen, viskosen Substanzen, mit einem mit den Substanzen beschickten Behälter (10) mit mindestens einer Ausflussöffnung (12), die durch ein daran vorbeigeführtes gelochtes Band (9) periodisch geöffnet und wieder geschlossen wird, so dass die Substanzen aus den Löchern (14) in Tropfenform auf ein darunter geführtes, insbesondere als Kühlband ausgebildetes Band (1) fallen und sich dort verfestigen,
**dadurch gekennzeichnet, dass**
das als gelochtes Band ein Stahlband (9) mit einer für die Tropfenbildung ausreichenden Dicke verwendet wird, dass dieses Stahlband um Umlenktrommeln (7, 8) mit ausreichend großen Durchmessern, um eine Rissbildung an den Löchern (14) zu vermeiden, geführt ist und dass dem Stahlband (9) mindestens im Abstand vor der Stelle der Tropfenbildung eine Beheizungseinrichtung zugeordnet ist.

2. Vorrichtung nach Anspruch 1, **dadurch gekennzeichnet, dass** die Beheizungseinrichtung (16) im Innenraum der Umlenktrommel (7) angeordnet ist, die in der Bewegungsrichtung des StahlbandUntertrums (9a) vor der Stelle der Tropfenbildung liegt.

3. Vorrichtung nach den Ansprüchen 1 und 2, **dadurch gekennzeichnet, dass** die Ausflussöffnung als eine quer zur Bewegungsrichtung des Stahlbandes (9) verlaufende und über die Bandbreite durchgehende nutartige Ausnehmung (12) ausgebildet ist, die in der am Stahlband anliegenden Fläche (13) des Behälters (10) mündet.

4. Vorrichtung nach den Ansprüchen 1 und 2, **dadurch gekennzeichnet, dass** die Ausflussöffnung die Form von mehreren parallel zueinander und quer zur Bewegungsrichtung des Stahlbandes (9) verlaufenden nutartigen Ausnehmungen (12a bis 12d) aufweist, die alle in der am Stahlband (9) anliegenden Fläche (13) des Behälters (10) münden.

5. Vorrichtung nach Anspruch 3 oder 4, **dadurch gekennzeichnet, dass** die nutartigen Ausnehmungen (12 und 12a bis 12d) jeweils Teil eines Mundstückes (10a) sind, das mit dem Behälter (10) in Verbindung steht.

6. Vorrichtung nach Anspruch 5, **dadurch gekennzeichnet, dass** die am Stahlband (9) anliegende Fläche (13) des Mundstückes (10a) leicht konvex gewölbt ist.

7. Vorrichtung nach Anspruch 6, **dadurch gekennzeichnet, dass** das Stahlband (9) unter Vorspannung an der konvexen Fläche (13) des Mundstückes (10a) anliegt.

## Claims

1. A device for the production of granulates made of flowable, viscous substances comprising a container (10) supplied with the substances having at least one discharge opening (12) that is periodically opened and closed by a passing perforated belt (9) so that the substances fall from the orifices (14) in the form of drops onto a conveyor belt traveling below, particularly a belt (1) designed as a cooling belt on which said substances solidify, **characterised in that** a steel belt (9) used as a perforated belt has a sufficient thickness for the drop-forming process, that said steel belt is guided around guide drums (7, 8) having sufficiently large diameters to prevent forming of cracks at the orifices (14), and that a heating unit is arranged for the steel belt (9) at least at a distance upstream from the drop-forming point.

2. The device according to claim 1, **characterised in that** the heating unit (16) is arranged in the interior of the guide drum (7) that is disposed upstream from the drop-forming point in the movement direction of the lower flight (9a) of said steel belt.

3. The device according to claims 1 and 2, **characterised in that** said discharge opening is designed as a groove-like recess (12) extending across the width of said belt and running transversely to the movement direction of the steel belt (9) whereby said recess leads to the surface (13) of the container (10) resting against said steel belt.

4. The device according to claims 1 and 2, **characterised in that** the discharge opening has the shape of a plurality of groove-like recesses (12a through 12d) running parallel to one another and extending transversely to the movement direction of the steel belt (9), and whereby all recesses lead to the surface (13) of the container (10) resting against the steel belt (9).

5. The device according to claim 3 or 4, **characterised in that** the groove-like recesses (12 and 12a through 12d) are all a part of a mouthpiece (10a) that is connected to the container (10).

6. The device according to claim 5, **characterised in that** the surface (13) of the mouthpiece (10a) resting against the steel belt (9) has a slightly convex shape.

7. The device according to claim 6, **characterised in that** the steel belt (9) lies against the convex surface (13) of the mouthpiece (10a) under initial tension.

## Revendications

1. Dispositif de production de granulés à partir de substances fluides visqueuses, avec un récipient (10) alimenté par les substances, lequel présente au moins une ouverture d'écoulement (12) périodiquement ouverte et refermée au moyen d'une bande perforée (9) la traversant, si bien que les substances sortent par les perforations (14) sous forme de gouttes et tombent sur un tapis (1), en particulier un tapis refroidissant se trouvant au-dessous, où elles durcissent,
**caractérisé en ce**
**qu'**un feuillard d'acier (9) d'une épaisseur suffisamment importante pour permettre la formation de gouttes est utilisé en tant que bande perforée, que ce feuillard d'acier est conduit autour de poulies de renvoi (7, 8) de diamètre suffisamment grand pour éviter la fissuration des perforations (14), et qu'un dispositif de chauffe est associé au feuillard d'acier (9) au moins à une certaine distance avant l'endroit où se forment les gouttes.

2. Dispositif selon la revendication 1, **caractérisé en ce que** le dispositif de chauffe (16) est installé à l'intérieur de la poulie de renvoi (7) qui se trouve, dans la direction de déplacement du brin inférieur (9a) du feuillard d'acier, avant l'endroit où les gouttes se forment.

3. Dispositif selon les revendications 1 et 2, **caractérisé en ce que** l'ouverture d'écoulement est conçue sous forme d'un évidement continu (12) de type rainure sur toute la largeur de la bande et s'étendant transversalement à la direction de mouvement du feuillard d'acier (9), lequel évidement aboutit à la surface (13) du récipient (10) accolée au feuillard d'acier. 4.

4. Dispositif selon les revendications 1 et 2, **caractérisé en ce que** l'ouverture d'écoulement présente la forme de plusieurs évidements (12a à 12d) de type rainures s'étendant parallèlement l'une à l'autre et transversalement par rapport à la direction de mouvement du feuillard d'acier (9), lesquels évidements aboutissent tous à la surface (13) du récipient (10) accolée au feuillard d'acier (9).

5. Dispositif selon la revendication 3 ou 4, **caractérisé en ce que** les évidements en forme de rainures (12 et 12a à 12d) forment respectivement une partie d'un bec (10a) qui est relié au récipient (10).

6. Dispositif selon la revendication 5, **caractérisé en ce que** la surface (13) du bec (10a) accolée au feuillard d'acier (9) est légèrement bombée de façon convexe.

7. Dispositif selon la revendication 6, **caractérisé en ce que** le feuillard d'acier (9) est appliqué sous précontrainte contre la surface convexe (13) du bec (10a).
